# EUROPÄISCHE PATENTSCHRIFT

(11) **EP 0 666 156 B1**
(45) Veröffentlichungstag und Bekanntmachung des Hinweises auf die Patenterteilung: **04.08.1999**
(21) Anmeldenummer: 94120365.5
(22) Anmeldetag: 22.12.1994
(51) Int. Cl.: B28B 17/00, B65G 59/08, B65G 59/00

(54) **Verfahren und Vorrichtung zum reihenweisen Auseinanderrücken von quaderförmigen, plastischen Porenbetonkörpern**
Process and device for separating from each other, rows of parallelepiped blocks from porous concrete still in a non-cured state
Procédé et dispositif pour séparer les unes des autres des tranches de blocs parallélépipèdiques en béton poreux à l'état encore plastique

(30) Priorität: 03.02.1994 DE 4403228
(43) Veröffentlichungstag der Anmeldung: 09.08.1995
(73) Patentinhaber: Hebel Aktiengesellschaft, 82275 Emmering (DE)
(72) Erfinder: Hartmann, Wilfried, D-82275 Emmering (DE); Brandt, Eberhard, D-82256 Fürstenfeldbruck (DE)
(74) Vertreter: Liebau, Gerhard, Dipl.-Ing.

(56) Entgegenhaltungen:
- DE-B- 1 267 606
- FR-A- 2 208 334
- FR-A- 2 211 872
- US-A- 4 452 353

## Beschreibung

Die Erfindung betrifft ein Verfahren und eine Vorrichtung zum reihenweisen Auseinanderrücken von quaderförmigen, plastischen Porenbetonkörpern, die durch Längs- und Querschneiden eines quaderförmigen, plastischen Porenbetonblockes gebildet sind.

Eine bekannte Vorrichtung (DE-A-25 02 866), die eigentlich zum Schneiden eines noch plastischen Porenbetonblockes vorgesehen ist, kann auch zum Auseinanderrücken der geschnittenen Porenbetonkörper verwendet werden. Die bekannte Vorrichtung weist ein rechteckiges Grundgestell mit mehreren, parallel nebeneinander angeordneten, horizontalen Lamellen, die in dem Grundgestell quer zu ihrer Längsrichtung horizontal verschiebbar sind, mehrere sich von den Lamellen nach oben erstreckende Stützböcke, die an der Oberseite jeder Lamelle jeweils in einer Reihe in Abständen voneinander angeordnet sind und eine, zumindest an den Enden jeder Lamelle angreifende Verschiebeeinrichtung auf, mittels welcher die Lamellen verschiebbar und ihr gegenseitiger Abstand veränderbar ist. Bei dieser bekannten Vorrichtung erstrecken sich die Lamellen in Querrichtung des Gestells und auch in Querrichtung des quaderförmigen Porenbetonblockes. Nachdem der auf seiner Grundfläche liegende Porenbetonblock in Querrichtung geschnitten wurde und hierdurch Schnittspalte vorhanden sind, werden die Lamellen durch Betätigen der Verschiebeeinrichtung zusammengeschoben, so daß dann die Schnittspalte geschlossen sind. Hierdurch soll erreicht werden, daß beim anschließenden Längsschneiden des Porenbetonblockes die Kanten beim Austritt der Schneiddrähte an dem jeweiligen Schnittspalt nicht ausbrechen. Nachdem der Porenbetonblock auch in Längsrichtung geschnitten wurde. werden dann die Lamellen in Längsrichtung des Gestells und auch in Längsrichtung des Porenbetonblockes wieder auseinandergerückt, so daß die Porenbetonkörper nunmehr auch wieder in Querrichtung des Blockes auseinandergerückt sind und hierdurch das Zusammenbacken der Porenbetonkörper beim Härten verhindert wird. Das Auseinanderrücken funktioniert bei dieser bekannten Vorrichtung jedoch nur dann, wenn der Block, wie es bei dieser Vorrichtung nur möglich ist, liegend geschnitten wird und die geschnittenen Reihen von Porenbetonkörper in Längsrichtung des Porenbetonblockes auseinandergerückt werden. Das Auseinanderrücken erfolgt hierbei nämlich in einer Richtung, in der die Porenbetonkörper eine Breite von 250 mm oder einem Vielfachen hiervon haben, weshalb sie beim Auseinanderrücken in Längsrichtung des Porenbetonblockes nicht umfallen. In Querrichtung des Porenbetonblockes haben die Porenbetonkörper einen gegenseitigen Abstand, der der Breite des Schnittspaltes von etwa 0,8 - 1 mm entspricht. Dieser Abstand reicht zwar aus um ein Zusammenbacken zu verhindern. Wenn jedoch die Porenbetonkörper während der Dampfdruckbehandlung im Autoklaven auch einem Trocknungsvorgang unterworfen werden sollen, wie es in der EP-A-0 133 239 oder der DE-A-41 35 119 beschrieben ist, dann ist dieser Abstand zu gering, um die Trocknung innerhalb angemessener Zeit durchführen zu können.

Bei der vorher beschriebenen Vorrichtung, die auch zum Längs- und Querschneiden des Porenbetonblockes vorgesehen ist, wird der Porenbetonblock liegend geschnitten, d. h. so wie er auch gegossen wurde. Hierbei muß die Länge der zum Querschneiden verwendeten Drähte mindestens so groß sein wie die Breite des Porenbetonblockes, die üblicherweise etwa 1,5 m beträgt. Derartige lange Schneiddrähte können beim Schneiden seitlich ausweichen, worunter die Genauigkeit der geschnittenen Porenbetonkörper leidet. Aus diesem Grunde wurde bereits in der DE-C-958 639 vorgeschlagen, den Porenbetonblock nach dem Gießen um 90° hochkant zu stellen und dann in dieser Lage mit parallel zur kürzesten Kante vertikal und horizontal geführten Schneiddrähten in Porenbetonkörper aufzuteilen. Dies hat zwar den Vorteil, daß die Schnittgenauigkeit erhöht wird, jedoch liegen die geschnittenen Porenbetonkörper übereinander und können dann beim Dampfhärten infolge ihres Gewichtes zusammenbacken. Es wurde daher in der DE-A-21 08 300 vorgeschlagen, den hochkant stehend geschnittenen Porenbetonblock vor dem Einbringen in den Autoklav wieder um 90° auf seine größte Breitseite (Grundfläche) zurückzukippen. Da jedoch beim Längsschneiden des hochkantstehenden Blockes das Gewicht desselben die beim Längsschneiden entstehenden horizontalen Schnittspalte sofort wieder schließt und die geschnittenen Porenbetonplatten durch das Gewicht fest aufeinandergedrückt werden, besteht auch nach dem Zurückkippen die Gefahr, daß die Porenbetonkörper beim Dampfdruckhärten zusammenbacken. Außerdem liegen die Porenbetonkörper auch nach dem Zurückkippen in Querrichtung des Porenbetonblockes dicht aneinander an, so daß an ihre einander zugekehrten Begrenzungsflächen kein Härtedampf gelangen kann. Hierdurch wird der Härtevorgang verlängert und es ist auch nicht möglich, die Porenbetonkörper während der Behandlung im Autoklaven innerhalb angemessener Zeit einem Trockungsvorgang zu unterwerfen, wie es in der EP-A-0 133 239 oder der DE-A-41 35 119 beschrieben ist.

Der Erfindung liegt daher die Aufgabe zugrunde, ein Verfahren und eine Vorrichtung zum reihenweisen Auseinanderrücken von quaderförmigen, plastischen Porenbetonkörpern, die durch Längs- und Querschneiden eines quaderförmigen, plastischen Porenbetonblockes gebildet sind, der eingangs erwähnten Art aufzuzeigen, mit dem Porenbetonkörper, die in Querrichtung des Porenbetonblockes jede beliebige Dicke aufweisen können, problemlos und ohne Gefahr des Umkippens in Querrichtung des Porenbetonblockes auseinandergerückt werden können.

Bei dem Verfahren zum reihenweisen Auseinanderrücken von quaderförmigen, plastischen Porenbetonkörpern, die durch Längs- und Querschneiden eines quaderförmigen, plastischen Porenbetonblockes gebildet sind, wobei der geschnittene Block zum Auseinanderrücken auf mehrere zueinander parallele Lamellen so aufgelegt wird, daß jede Reihe von Porenbetonkörpern auf mindestens einer Lamelle abgestützt ist und dann durch aufeinanderfolgendes Auseinanderrücken der Lamellen die Porenbetonkörper reihenweise auseinandergerückt werden, besteht das Neue darin, daß der Porenbetonblock mit seiner größten Seitenfläche (Grundfläche) so auf die Lamellen aufgelegt wird, daß seine längste Seitenkante parallel zur Lamellenlängsrichtung verläuft, daß vor dem Auseinanderrücken von oben auf die oberen Enden aller Porenbetonkörper der abzurückenden Reihe und unabhängig davon von oben auf die oberen Enden aller Porenbetonkörper der an der abzurückenden Reihe anliegenden ruhenden Reihe eine Klemmkraft ausgeübt wird und daß beim Auseinanderrücken die Klemmkraft aufrechterhalten und synchron mit der Verschiebung der abrückenden Lamelle in Abrückrichtung eine hierzu gleich gerichtete Schiebekraft auf die oberen Enden der von der abrückenden Lamelle getragenen Porenbetonkörper ausgeübt wird.

Die Vorrichtung zum reihenweisen Auseinanderrücken von quaderförmigen, plastischen Porenbetonkörpern ist nach der Erfindung **dadurch gekennzeichnet**, daß die Lamellen in Längsrichtung des Grundgestells parallel zur längsten Seite des Porenbetonblockes angeordnet sind, daß mit Abstand oberhalb des Grundgestells ein horizontaler und parallel zu den Lamellen verlaufender Längsträger vorgesehen ist, der parallel zur Verschieberichtung der Lamellen verfahrbar ist, daß an dem Längsträger zwei zueinander und zum Längsträger parallele, horizontale Klemmleisten vertikal beweglich angeordnet sind, von denen jede an die oberen Enden der Porenbetonkörper von einer der beiden jeweils auseinander zu rückenden, benachbarten Reihen von oben her andrückbar ist, daß eine der beiden Klemmleisten an dem Längsträger in dessen Bewegungsrichtung mittels einer Verschiebeeinrichtung verschiebbar ist, und daß die Verschiebeeinrichtung der Lamellen und die Verschiebeeinrichtung der einen Klemmleiste so miteinander synchronisiert sind, daß beim Abrücken einer Lamelle gegenüber der benachbarten, ruhenden Lamelle die vertikal oberhalb der abrückenden Lamelle befindliche Klemmleiste synchron mit dieser bewegt wird und die vertikal der oberhalb der ruhenden Lamelle befindliche Klemmleiste ortsfest bleibt.

Mit dem erfindungsgemäßen Verfahren, bzw. der erfindungsgemäßen Vorrichtung ist es möglich, Porenbetonkörper, die durch Schneiden eines vorzugsweise hochkant stehenden Blockes gebildet sind, problemlos und ohne die Gefahr des Umkippens in Querrichtung des Porenbetonblockes auseinander zu rücken. Auch wenn die Porenbetonkörper nach dem Zurückkippen des Porenbetonblockes auf seine größte Seitenfläche aneinanderkleben, können die Porenbetonkörper beim Auseinanderrücken nicht umfallen, weil beim Auseinanderrücken gleichzeitig auf ihre oberen und unteren Enden Auseinanderrückkräfte ausgeübt werden. Da die Erfindung von dem Gedanken ausgeht, die Porenbetonkörper in Querrichtung des geschnittenen Porenbetonblockes auseinander zu rücken, ist es außerdem möglich, mit der erfindungsgemäßen Vorrichtung Porenbetonkörper auseinander zu rücken, die in Querrichtung des Blockes, ausgehend von einer Mindestdicke von etwa 50 mm, jede beliebige Dicke aufweisen können. Zur Abstützung von Porenbetonkörpern unterschiedlicher Dicke werden je nach Dicke eine Lamelle oder auch mehrere gruppenweise zusammengeschobene Lamellen verwendet. Da hierbei die Querholme des Härterostes, mit dem der Porenbetonblock zu der Auseinanderrückvorrichtung gebracht und von dieser wieder abtransportiert wird, in Verschieberichtung der Lamellen verlaufen, können die Lamellen zur Anpassung an verschiedene Dicken von Porenbetonkörpern beliebig verschoben werden, ohne daß diese Verschiebung durch die Querholme beeinträchtigt wird. Aufgrund der Tatsache, daß der Porenbetonblock vor dem Auseinanderrücken vorzugsweise hochkant stehend geschnitten werden kann, kann dies mit verhältnismäßig kurzen Schneiddrähten, die nur wenig länger sind als die kürzeste Seitenkante des Porenbetonblockes, erfolgen, wodurch die Porenbetonkörper eine hohe Genauigkeit aufweisen.

Vorteilhafte Ausgestaltungen sind in den Unteransprüchen gekennzeichnet.

Die Erfindung wird in folgendem anhand eines in der Zeichnung dargestellten Ausführungsbeispieles näher erläutert.

Es zeigen:
- Fig. 1: eine Vorderansicht der Vorrichtung in Richtung I der Fig. 2,
- Fig. 2: eine Seitenansicht derselben in Richtung II der Fig. 1,
- Fig. 3: eine Seitenansicht von Teilen der Vorrichtung in einem größeren Maßstab,
- Fig. 4: eine Teil-Vorderansicht einer Lamelle und von deren Führung,
- Fig. 5: einen Schnitt nach der Linie V-V der Fig. 4,
- Fig. 6: einen Teilschnitt nach der Linie VI-VI der Fig. 2 am Ende einer Lamelle,

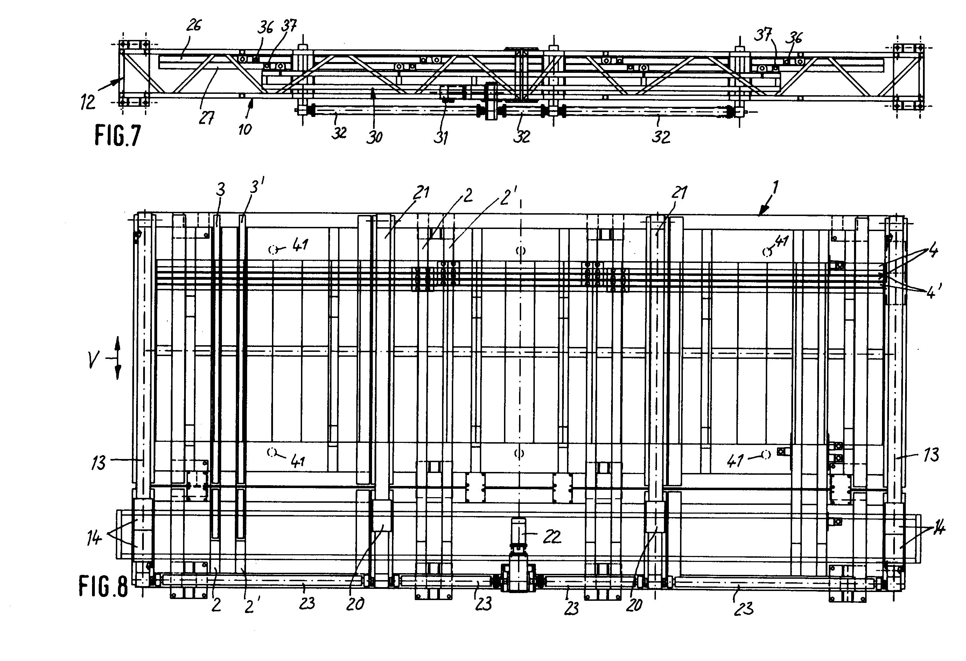

- Fig. 7: eine Draufsicht auf das Portal der Vorrichtung,
- Fig. 8: eine Draufsicht auf das Grundgestell mit einigen Lamellen.

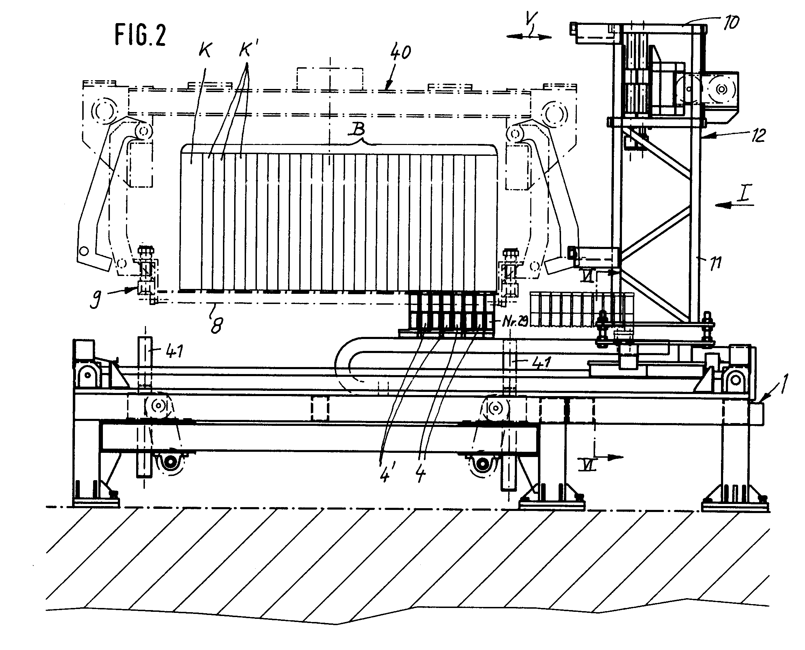

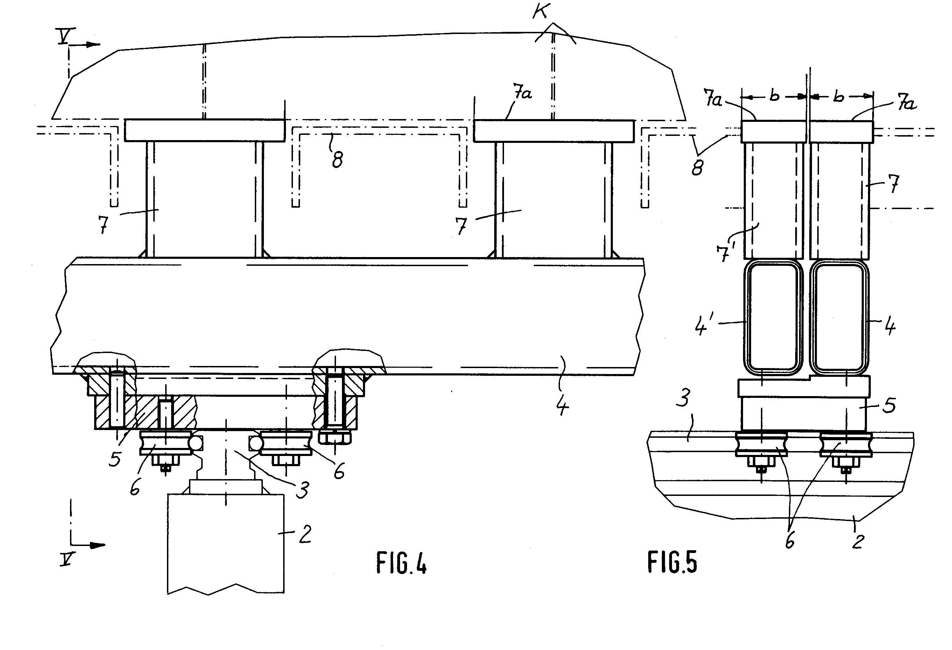

Das in Draufsicht im wesentlichen rechteckige Grundgestell 1 weist mehrere Querträger 2,2' mit je einer Führungsschiene 3, 3' auf. Einzelheiten einer solchen Führungsschiene 3 sind in Fig. 4 dargestellt. Die Führungsschienen 3, 3' dienen zur verschiebbaren Lagerung von einer Vielzahl von Lamellen 4,4', die sich in Längsrichtung des Grundgestelles 1 erstrecken. Auf diesen Lamellen 4 ist ein bereits geschnittener, noch plastischer quaderförmiger Porenbetonblock B so absetzbar, daß sich seine längste Seite, die 6 bis 7,5 m lang sein kann, in Längsrichtung der Lamellen 4 erstreckt. Jede Lamelle 4 hat demzufolge eine Länge, die der Länge des Porenbetonblockes von 6 bzw. 7,5 m entspricht. Die Breite des Porenbetonblockes kann beispielsweise 1,5 m, seine Höhe 625 mm betragen. Damit die Lamellen 4,4', wie es in Fig. 2, 3 und 5 dargestellt ist, dicht zusammengefahren werden können, sind den Lamellen 4 die Fahrschienen 3 und den jeweils zwischen zwei Lamellen 4 liegenden Lamellen 4' die Fahrschienen 3' zugeordnet. Im Bereich jeder Fahrschiene 3 weist jede Lamelle 4 ein kleines Fahrgestell 5 auf, welches mit insgesamt vier Rollen 6 an der betreffenden Fahrschiene 3 gelagert ist. Da das Fahrgestell 5 in Richtung der Fahrschiene 3 eine größere Breite aufweist als die Lamelle 4, könnte die benachbarte Lamelle 4' nicht dicht genug an die Lamelle 4 herangeschoben werden. Deshalb sind für jede zweite Lamelle 4' die separaten Führungsschienen 3' vorgesehen, an denen die Lamellen 4' mittels Fahrgestellen und Rollen, die den vorherbeschriebenen Fahrgestellen 5 und Rollen 6 entsprechen, gelagert sind.

Jede Lamelle 4, 4' ist an ihrer Oberseite mit einer Mehrzahl von nach oben ragenden Stützböcken 7, 7' versehen, die jeweils in einer Reihe in Abständen a voneinander angeordnet sind. Diese Abstände a sind erforderlich, damit zwischen den Stützböcken 7 bzw. 7' einer Lamelle 4,4' die strichpunktiert dargestellten Querholme 8 eines Härterostes 9 Platz finden, der zum Transport des Porenbetonblockes B bzw. der Porenbetonkörper dient.

Oberhalb des Grundgestells 1 ist mit einem Abstand H, der größer ist als die maximale Höhe der Porenbetonkörper K, ein horizontaler Längsträger 10 angeordnet, der sich parallel zu den Lamellen 4, 4' erstreckt. Dieser Längsträger 10 bildet zusammen mit den an den Enden des Längsträgers 10 vorgesehenen Ständern 11 zweckmäßig ein Portal 12, welches in Verschieberichtung V der Lamellen 4, 4' verfahrbar ist. Zu diesem Zweck sind an den beiden Querseiten des Grundgestelles 1 Fahrschienen 13 angeordnet. An diesen Fahrschienen 13 sind die beiden Ständer 11 mittels Fahrgestell 14 horizontal verfahrbar gelagert.

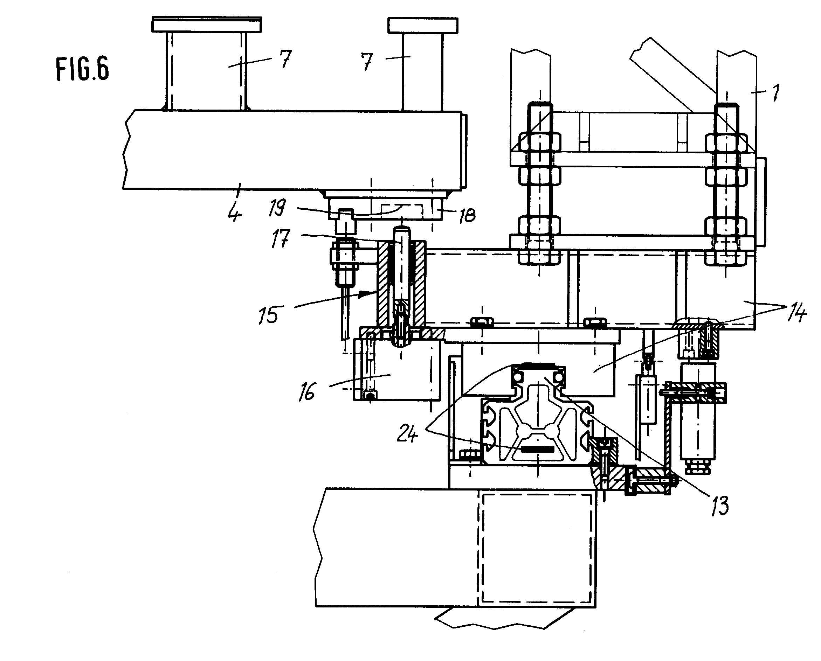

Gemäß Fig. 6 ist an dem Fahrgestell 14 eine Kupplungsvorrichtung 15 vorgesehen, die einen mittels eines Preßluftzylinders 16 vertikal verschiebbaren Kupplungsbolzen 17 aufweist. Jede Lamelle 4,4' ist an ihren beiden Enden mit einem Kupplungsstück 18 versehen, welches eine nach unten offene Ausnehmung 19 aufweist. Diese Ausnehmung 19 kann in Längsrichtung der Lamelle als Langloch ausgebildet sein, weist jedoch in Verschieberichtung V der Lamelle eine Abmessung auf, die dem Durchmesser des Kupplungsbolzens 17 entspricht. Da die kleinste Dicke der auseinander zu rückenden Porenbetonkörper K 50 mm beträgt, muß die Breite b jeder einzelnen Lamelle 4,4' kleiner sein als 50 mm. Wenn die Kupplungsvorrichtungen 15 zum horizontalen Verschieben der Lamellen 4, 4' nur an deren Enden angreifen würden, dann würden sich die über 6 m langen und verhältnismäßig schmalen Lamellen auch in horizontaler Richtung durchbiegen. Damit dies nicht geschieht, sind zwischen den Enden der Lamellen 4, 4' zwei weitere Kupplungsvorrichtungen 15 vorgesehen, die den vorherbeschriebenen Kupplungsvorrichtungen 15 entsprechen. Jede dieser weiteren Kupplungsvorrichtungen 15 ist an einem Schlitten 20 angeordnet, der seinerseits an einer Führungsschiene 21 horizontal verschiebbar gelagert ist. Die beiden Führungsschienen 21 erstrecken sich parallel zu den Fahrschienen 13. Die Schlitten 20 sind synchron mit den Fahrgestellen 14 des Portals 12 antreibbar. Dies kann in zweckmäßiger Weise durch einen am Grundgestell 1 angeordneten gemeinsamen Antriebsmotor 22 erfolgen, der über parallel zu den Lamellen 4, 4' angeordnete Antriebswellen 23 je einen endlosen, mit dem jeweiligen Fahrgestell 14 oder Schlitten 20 verbundenen endlosen Zahnriemen 24 (s. Fig. 6) antreibt, welcher sich parallel zu den Fahrschienen 13 bzw. Führungsschienen 21 erstreckt. Anstelle endloser Zahnriemen könnten auch endlose Ketten oder beispielsweise ein Spindelantrieb verwendet werden.

Wichtiger Bestandteil der Vorrichtung sind zwei zueinander parallele, horizontal und parallel zu den Lamellen 4,4' verlaufende Klemmleisten 26, 27, die in Richtung C vertikal verschiebbar sind. Diese Klemmleisten 26, 27 sind an dem Längsträger 10 gelagert. Jede der Klemmleisten 26, 27 kann über die ganze Länge des Längsträgers 10 einstückig sein oder auch aus mehreren Abschnitten bestehen. Die Klemmleiste 26 ist mit mehreren vertikalen Führungsstangen 28 verbunden, die unmittelbar am Längsträger 10, beispielweise über entsprechende Führungsbüchsen 29, vertikal verschiebbar gelagert sind. In dem Längsträger 10 ist ein Tragbalken 30 in Verschieberichtung des Portals 12, d.h. auch in Verschieberichtung V der Lamellen horizontal verschiebbar gelagert. Zur Verschiebung des Tragbalkens 30 in dem Längsträger 10 ist ein Antriebsmotor 31 vorgesehen, der über horizontale Antriebswellen 32 und nicht dargestellte endlose Zahnriemen drei Schlitten 33 antreibt, mit denen der Tragbalken 30 im Längsträger 10 in Richtung D verschiebbar gelagert ist. Der Antriebsmotor 31 des Tragbalkens 30 ist über eine sogenannte elektrische Welle mit dem Antriebsmotor 22 der Fahrgestelle 14 und der Schlitten 20 so gekuppelt, daß die Bewegung des Portals 12 in Richtung V und die des Tragbalkens 30 in Richtung D synchron miteinander, jedoch in entgegengesetzten Richtungen erfolgt. Die Bewegungen von Portal 12 und Tragbalken 30 erfolgen also gleichzeitig und mit gleicher Weglänge, jedoch in entgegengesetzten Richtungen.

Mit der zweiten Klemmleiste 27 sind die vertikalen Führungsstangen 35 verbunden, die ihrerseits an dem verschiebbaren Tragbalken 30 vertikal beweglich gelagert sind. Zum Antrieb der Klemmleisten 26, 27 dienen jeweils mehrere Pneumatikzylinder 36, 37.

Die Arbeitsweise der neuen Vorrichtung ist folgende:
In einer nicht dargestellten rechteckigen Gießform wird zunächst ein annähernd quaderförmiger Porenbetonblock gegossen, wobei der horizontale Formboden die größte Fläche (Grundfläche) des Porenbetonblockes formt. Nachdem die Porenbetonmasse die sogenannte Grünstandsfestigkeit erreicht hat, werden die Formseitenwände entfernt und der Block zu einer Schneidmaschine gebracht. In dieser Schneidmaschine wird der Block zunächst um 90° gekippt, so daß er dann auf seiner längeren Schmalseite steht und die vorher horizontale Grundfläche vertikal angeordnet ist.
In dieser Stellung wird der Porenbetonblock zunächst durch waagerecht gespannte Drähte, die horizontal durch den Block gezogen werden, in Längsrichtung und anschließend durch horizontale Drähte, die von unten nach oben bewegt werden, in Querrichtung geschnitten. Je nachdem in welchem Abstand und in welcher Anzahl diese Schneiddrähte angeordnet sind, entstehen hierdurch mehr oder weniger große quaderförmige Porenbetonblöcke, die je nach Formaten als Porenbetonsteine, -blöcke oder -platten bezeichnet werden. Da beim Schneiden in Längsrichtung das Gewicht der über dem jeweiligen Schnittspalt befindlichen Porenbetonmasse nach unten drückt, schließt sich der Schnittspalt sofort wieder. Hingegen bleiben die Schnittspalte, die beim Querschneiden des Blockes entstehen, erhalten und ihre Breite entspricht im wesentlichen dem Durchmesser des Schneiddrahtes der zwischen 0,3 und 0,9 mm liegen kann. Der so in Längs- und Querrichtung geschnittene Porenbetonblock wird um 90° wieder zurückgekippt, so daß er mit seiner beim Schneiden vertikalen Grundfläche wieder horizontal auf einem Härterost 9 zu liegen kommt. Mittels eines Kranes kann der Härterost mit dem darauf liegenden geschnittenen Block zu der erfindungsgemäßen Vorrichtung transportiert werden.

Da die Vorrichtung zum Auseinanderrücken von Porenbetonkörpern mit ganz unterschiedlicher, zwischen 50 mm und 375 mm liegender Dicke bestimmt ist, muß sie zunächst der jeweiligen Dicke der Porenbetonkröper angepaßt werden. Es sei angenommen, daß der nach dem Schneiden 1450 mm breite Porenbetonblock durch Schneiden in Längsrichtung in quaderförmige Porenbetonkörper geschnitten wurde, wobei die beiden äußeren Porenbetonkörper K eine Dicke d von 100 mm, die dazwischen liegenden Porenbetonkörper K' eine Dicke d' von jeweils 50 mm aufweisen. In Längsrichtung des Porenbetonblockes B können die Porenbetonkörper K in einem Rastermaß von jeweils 250 mm geschnitten sein, wobei die Breite B1 in Längsrichtung auch einem Vielfachen des Rastermaßes von 250 mm entsprechen kann. Die Höhe der Porenbetonkörper K, K' beträgt einheitlich 625 mm. Wenn die fertiggestellten Porenbetonkörper später angeboten, verkauft und verarbeitet werden kann es sein, daß für die verschiedenen Abmessungen der Porenbetonkörper die Bezeichnungen vertauscht werden, weil meist die längste Abmessung als Länge bezeichnet wird.

Die Breite b der Stützflächen 7a der Stützböcke 7, 7' entspricht in Verschieberichtung V der Lamellen 4, 4' in etwa der kleinsten Dicke d' von 50 mm der Porenbetonkörper. In Wirklichkeit ist jedoch die Breite b kleiner als 50 mm, weil nämlich damit gerechnet werden muß, daß sich Reste von Porenbeton und sonstige Verunreinigungen an den einander zugekehrten vertikalen Flächen der Stützböcke festsetzen, so daß die Lamellen nicht mehr genügend dicht aneinander geschoben werden können. Aus diesem Grund sind die Kupplungsstücke 18 so ausgebildet, daß sie gleichzeitig auch als Abstandhalter dienen und beim Zusammenschieben der Lamellen 4, 4' diese so gegeneinander abstützen, daß die Lamellen mit einer genauen Teilung von 50 mm zueinander angeordnet sind. Der Einfachheit halber sei jedoch im folgenden angenommen, daß die Breite b der Stützflächen 7a der Teilung von 50 mm entspricht. Zur Aufnahme eines geschnittenen Porenbetonblockes B mit einer Gesamtbreite von 1450 mm benötigt man demzufolge 29 Lamellen. Das gesamte Paket von Lamellen 4, 4' ist normalerweise an einer Längsseite des Gestells 1 "geparkt". Die Bewegungen des Portals 12 werden durch eine geeignete automatische Programmsteuerung gesteuert. Wenn 29 Lamellen benötigt werden, wird das Portal an die 29. Lamelle verfahren und diese wird dann durch die vier an den Fahrgestellen 14 und den Schlitten 20 vorgesehenen Kupplungsvorrichtungen 15 mit dem Fahrgestell 14 und dem Schlitten 20 gekuppelt, indem die Kupplungsbolzen 17 mittels der Pneumatikzylinder 16 nach oben in die Ausnehmung 19 geschoben werden. Durch den Antriebsmotor 22 werden die Fahrgestelle 14 und Schlitten 20 und die mit ihnen gekuppelte Lamelle Nr. 29 von den restlichen geparkten Lamellen soweit weggeschoben, daß genügend Platz für die in Fig. 2 strichpunktiert dargestellte Hubvorrichtung 40 und den Härterost 9 entsteht.

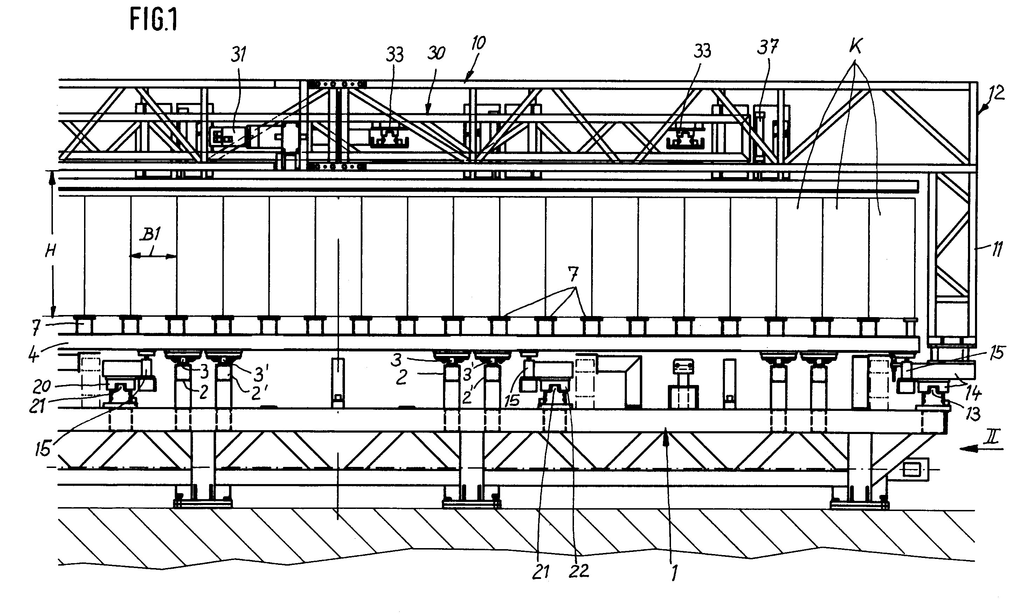

Die Kupplungsvorrichtungen 15 werden dann entkuppelt und das Portal 12 entsprechend Fig. 2 in seine rechte Ausgangsposition zurückgefahren. Mittels der Hubvorrichtung 40 kann der Härterost 9 mit dem darauf befindlichen, geschnittenen Porenbetonblock B über den Lamellen 4, 4' abgesetzt werden. Dabei kommen die Porenbetonkörper K, K' auf den Stützböcken 7, 7' zur Auflage, wobei die äußeren, 100 mm dicken Porenbetonkörper K sich jeweils auf zwei benachbarten Stützböcken 7, 7' abstützen, während jeder nur 50mm dicken Porenbetonkörpern K' sich jeweils auf der Hälfte von zwei benachbarten Stützböcken 7 einer Lamelle 4 oder zwei benachbarten Stützböcken 7' einer Lamelle 4' abstützt, wie es aus Fig. 1 und 4 ersichtlich ist. Der Härterost 9 wird soweit abgesenkt, daß die Oberfläche seiner Querholme 8 unterhalb der Stützfläche 7a liegt, die Querholme 8 jedoch nicht auf den Lamellen 4, 4' aufliegen. Zur Abstützung des Härterostes 9 in dieser Position dienen die Stempel 41, welche in eine entsprechende Position nach oben gefahren werden.

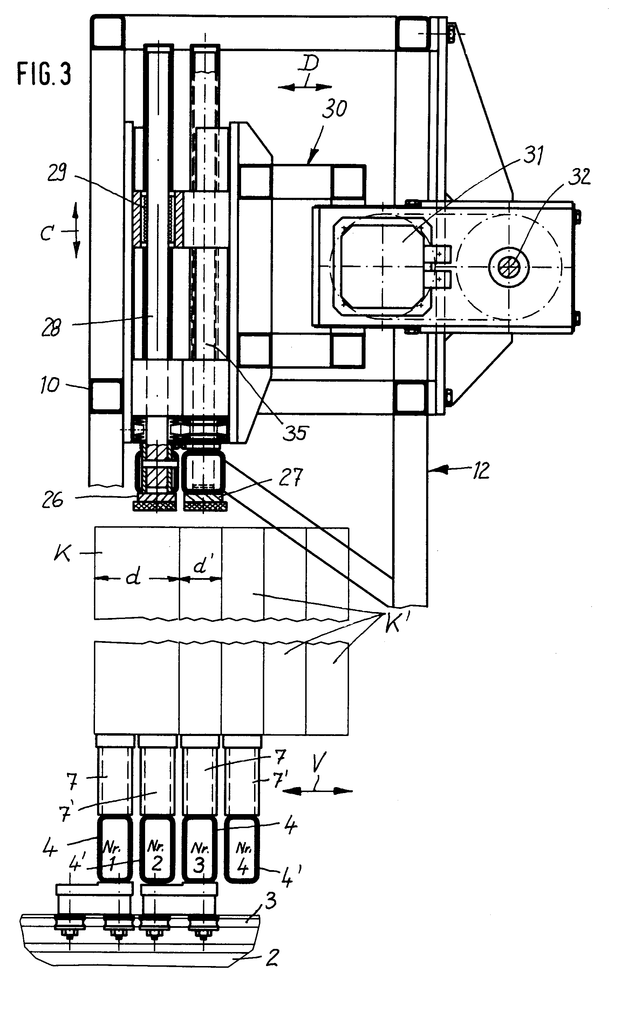

Es kann nun das Auseinanderrücken beginnen. Das Portal 12 wird zu diesem Zweck in Richtung V soweit nach links verfahren, bis sich die Kupplungsbolzen 17 unterhalb der zweiten Lamelle von links befinden. Die Lamelle Nr. 2 wird dann über die Kupplungsbolzen 17 mit den Fahrgestellen 14 und den Schlitten 20 gekuppelt. In dieser Stellung des Portals 12 befindet sich die unmittelbar vom Portal getragene Klemmleiste 26 vertikal oberhalb der Lamelle Nr. 2 und die vom Tragbalken 30 getragene Klemmleiste 27 vertikal oberhalb der Lamelle Nr. 3 (Fig. 3). Mittels der Pneumatikzylinder 36, 37 werden die Klemmleisten 26, 27 in Richtung C nach unten bewegt bis sie mit ausreichendem Druck auf den nach oben gerichteten Enden der Porenbetonkörper K bzw. K' aufliegen. Alle Porenbetonkörper K, die in Längsrichtung des Porenbetonblockes B nebeneinander liegen, sind somit durch die Klemmleiste 26 und die darunter befindliche Lamelle Nr. 2 geklemmt, während die daran anliegenden Porenbetonkörper K' der benachbarten Reihe durch die Klemmleiste 27 und die darunter liegende Lamelle Nr. 3 geklemmt sind. Wenn jetzt das Portal 12 gemäß Fig. 3 nach links verschoben wird, dann wird hierdurch die gekuppelte Lamelle Nr. 2 nach links bewegt und schiebt die Lamelle Nr. 1, auf deren Stützböcken 7 die erste Reihe von Porenbetonkörpern der grüßeren Dicke d ebenfalls abgestützt ist, vor sich her. Da die Porenbetonkörper K durch den Druck der Klemmleiste 26 geklemmt sind und sich die Klemmleiste 26 zusammen mit dem Längsträger 10 des Portals 12 ebenfalls nach links bewegt, wird die Klemmleiste 26 synchron mit den beiden Lamellen Nr. 1 und Nr. 2 nach links verschoben. Mit der gleichen Geschwindigkeit, jedoch in entgegengesetzter Richtung wird über den Antriebsmotor 31 der Tragbalken 30 angetrieben, so daß er sich relativ zum Portal 12 nach rechts bewegt. Da jedoch die Geschwindigkeit des Tragbalkens 30 gleich groß ist, wie die Fahrgeschwindigkeit des Portals, bleibt der Tragbalken 30 und damit die andere Klemmleiste 27 ortsfest. Die darunter befindliche Lamelle Nr. 3 bleibt infolge von Reibung ebenfalls ortsfest. Die zwischen der Klemmleiste 27 und der Lamelle Nr. 3 geklemmte Reihe von Porenbetonkörpern K' wird ortsfest gehalten. Hiermit ist sichergestellt, daß keiner der vorher aneinander klebenden Porenbetonkörper K und K' beim Auseinanderrücken umfällt. Wenn der Spalt, der zwischen zwei benachbarten Reihen von Porenbetonkörpern nach deren Auseinanderrücken entsteht, 2 mm betragen soll, dann wird die Lamelle Nr. 2 um die gewünschte Spaltbreite mal der Anzahl der durch Auseinanderrücken herzustellenden Spalte nach links bewegt, in diesem Fall 2 mm mal 26 oder auch etwas mehr.

Nachdem dies geschehen ist, werden die Kupplungsvorrichtungen 15 entkuppelt und die Klemmleisten 26, 27 angehoben. Das Portal 12 wird nach rechts zurückgefahren, bis sich die Kupplungsbolzen 17 unterhalb der Lamelle Nr. 3 befinden. Gleichzeitig wird der Tragbalken 30 gegenüber dem Längsträger 10 nach links in seine Ausgangsstellung zurückbewegt. Die Klemmleiste 26 befindet sich dann über der Lamelle Nr. 3 und die Klemmleiste 27 über der Lamelle Nr. 4. Lamelle Nr. 3 wird in der vorher beschriebenen Weise mit dem Portal gekuppelt und die beiden Klemmleisten 26 bzw. 27 auf die auf den Lamellen Nr. 3 bzw. 4 abgestützten Porenbetonkörper K' gedrückt. Nachdem auf diese Weise die nächsten beiden Reihen geklemmt sind, wird der Vorgang des Auseinanderrückens wiederholt. Der Fahrweg des Portals 12 wird hierbei gegenüber dem vorher zurückgelegten Fahrweg um 2 mm verkürzt, so daß nunmehr zwischen der zuerst abgerückten Reihe von Porenbetonkörpern K und der auf der Lamelle Nr. 3 befindlichen zweiten Reihe von Porenbetonkörpern K' ein Spalt von 2 mm verbleibt. Nachdem auf diese Weise alle Porenbetonkörper nacheinander reihenweise auseinandergerückt sind, fährt das Portal 12 wieder gemäß Fig. 2 in seine rechte Ausgangsposition und der Härterost 9 kann nunmehr mittels der Hubvorrichtung 40 angehoben werden, wobei er die nunmehr auseinandergerückten Porenbetonkörper von den Stützböcken 7, 7' abhebt. Der Härterost wird dann in bekannter Weise zu einem Autoklaven verfahren, wo die Porenbetonkörper auf dem Härterost verbleiben und dampfgehärtet werden.

Je nach der Dicke der Porenbetonkörper, die zwischen 50 und 375 mm betragen kann, werden zur Abstützung eines Porenbetonblockes mehr oder weniger nebeneinanderliegende Lamellen verwendet. Es können mit der neuen Vorrichtung auch Porenbetonkörper auseinandergerückt werden, deren Dicke nicht ein ganzes Vielfaches von 50 mm ist. Angenommen die Dicke der auseinander zu rückenden Porenbetonkörper würde 225 mm betragen, dann verwendet man zur Abstützung solcher Porenbetonkörper eine Gruppe von vier aneinanderliegenden Lamellen 4, 4'. Wenn die Lamellen zu Beginn des jeweiligen Arbeitsganges aus der Parkstellung mittels des Portals in ihre Arbeitsstellung gebracht werden, dann kann dies so erfolgen, daß zunächst die benötigte Anzahl von Lamellen 4, 4' als ganzes Paket von den geparkten Lamellen weggeschoben wird und daß dann die Lamellen ähnlich wie beim Auseinanderrücken gruppenweise auf einen Abstand gebracht werden, so daß zwischen jeder Gruppe von vier Lamellen ein Abstand von 25 mm vorhanden ist. Nachdem die Gruppen von Lamellen auf diese Weise positioniert sind, wird dann der Porenbetonblock auf den Lamellen abgesetzt und das Auseinanderrücken erfolgt dann in der vorher beschriebenen Weise, wobei vor dem Auseinanderrücken jeweils die letzte Lamelle jeder Gruppe mit dem Portal gekuppelt wird.

## Patentansprüche

1. Verfahren zum reihenweisen Auseinanderrücken von quaderförmigen, plastischen Porenbetonkörpern, die durch Längs- und Querschneiden eines quaderförmigen, plastischen Porenbetonblockes gebildet sind, wobei der geschnittene Block zum Auseinanderrücken auf mehrere zueinander parallele Lamellen so aufgelegt wird, daß jede Reihe von Porenbetonkörpern auf mindestens einer Lamelle abgestützt ist, und dann durch aufeinanderfolgendes Auseinanderrücken der Lamellen die Porenbetonkörper reihenweise auseinandergerückt werden, **dadurch gekennzeichnet**, daß der Porenbetonblock mit seiner größten Seitenfläche (Grundfläche), so auf die Lamellen aufgelegt wird, daß seine längste Seitenkante parallel zur Lamellenlängsrichtung verläuft, daß vor dem Auseinanderrücken von oben auf die oberen Enden aller Porenbetonkörper der abzurückenden Reihe und unabhängig davon von oben auf die oberen Enden aller Porenbetonkörper der an der abzurückenden Reihe anliegenden ruhenden Reihe eine Klemmkraft ausgeübt wird und daß beim Auseinanderrücken diese Klemmkraft aufrechterhalten und synchron mit der Verschiebung der abrückenden Lamelle in Abrückrichtung eine hierzu gleich gerichtete Schiebekraft auf die oberen Enden der von der abrückenden Lamelle getragenen Porenbetonkörper ausgeübt wird.

2. Verfahren nach Anspruch 1, **dadurch gekennzeichnet**, daß der Porenbetonblock auf seiner langen Schmalseite hochkantstehend geschnitten und vor dem Auflegen auf die Lamellen um 90° gekippt wird, so daß er auf seiner größten Seitenfläche liegt, bevor er auf die Lamellen aufgelegt wird.

3. Vorrichtung zum reihenweisen Auseinanderrücken von quaderförmigen, plastischen Porenbetonkörpern, die durch Längs- und Querschneiden eines quaderförmigen, plastischen Porenbetonblockes gebildet sind, mit einem im wesentlichen rechteckigen Grundgestell, mit mehreren parallel nebeneinander angeordneten, horizontalen Lamellen, die in dem Grundgestell quer zu ihrer Längsrichtung horizontal verschiebbar sind, mit mehreren sich von den Lamellen nach oben erstreckenden Stützböcken, die an der Oberseite jeder Lamelle jeweils in einer Reihe in Abständen voneinander angeordnet sind, und mit einer zumindest an den Enden jeder Lamelle angreifenden Verschiebeeinrichtung, mittels welcher die Lamellen verschiebbar und ihr gegenseitiger Abstand veränderbar ist, **dadurch gekennzeichnet**, daß die Lamellen (4, 4') in Längsrichtung des Grundgestelles (1) parallel zur längsten Seite des Porenbetonblockes (B) angeordnet sind, daß mit Abstand (H) oberhalb des Grundgestelles (1) ein horizontaler und parallel zu den Lamellen (4, 4' ) verlaufender Längsträger (10) vorgesehen ist, der in Verschieberichtung (V) der Lamellen (4, 4') verfahrbar ist, daß an dem Längsträger (10) zwei zueinander und zum Längsträger parallele, horizontale Klemmleisten (26, 27) vertikal beweglich angeordnet sind, von denen jede an die oberen Enden der Porenbetonkörper (K, K') von einer der beiden jeweils auseinander zu rückenden, benachbarten Reihen von oben her andrückbar ist, daß eine (27) der beiden Klemmleisten an dem Längsträger (10) in dessen Bewegungsrichtung (V) mittels einer Verschiebeeinrichtung (30-33) verschiebbar ist, und daß die Verschiebeeinrichtung (14-24) der Lamellen (4, 4') und die Verschiebeeinrichtung (30-33) der einen Klemmleiste (27) so miteinander synchronisiert sind, daß beim Abrücken einer Lamelle (4) gegenüber der benachbarten, ruhenden Lamelle (4') die vertikal oberhalb der abrückenden Lamelle (4) befindliche Klemmleiste (26) synchron mit dieser bewegt wird und die vertikal oberhalb der ruhenden Lamelle (4') befindliche Klemmleiste (27) ortsfest bleibt.

4. Vorrichtung nach Anspruch 3, **dadurch gekennzeichnet**, daß der Längsträger (10) Bestandteil eines in Verschieberichtung (V) der Lamellen (4, 4') verfahrbaren Portals (12) ist.

5. Vorrichtung nach Anspruch 4, **dadurch gekennzeichnet** daß das Portal (12) auf Fahrschienen (13) verfahrbar ist, die an den beiden Querseiten des Grundgestelles (1) angeordnet sind.

6. Vorrichtung nach Anspruch 4, **dadurch gekennzeichnet**, daß am Fahrgestell (14) jedes Ständers (11) des Portals (12) eine Kupplungsvorrichtung (15) angeordnet ist, mit welcher die jeweils abzurückende Lamelle (4, 4') mit dem Fahrgestell (14) kuppelbar ist.

7. Vorrichtung nach Anspruch 6, **dadurch gekennzeichnet**, daß die Kupplungsvorrichtung (15) einen Kupplungsbolzen (17) umfaßt, der zum Kuppeln in eine Ausnehmung (19) an der Lamelle (4, 4') einschiebbar ist.

8. Vorrichtung nach Anspruch 5, **dadurch gekennzeichnet**, daß zwischen den Fahrschienen (13) des Portals (12) parallel zu diesen verlaufende Führungsschienen (21) vorgesehen sind, an denen jeweils ein synchron mit den Fahrgestellen (14) des Portals (12) antreibbarer Schlitten (20) gelagert ist und daß an jedem Schlitten (20) eine Kupplungsvorrichtung (15) angeordnet ist, mit welcher die jeweils abzurückende Lamelle (4, 4') mit dem Schlitten (20) kuppelbar ist.

9. Vorrichtung nach den Ansprüchen 6 und 8, **dadurch gekennzeichnet**, daß zum synchronen Antrieb der Fahrgestelle (14) und Schlitten (20) ein gemeinsamer Antriebsmotor (22) vorgesehen ist, der über parallel zu den Lamellen (4, 4') angeordnete Antriebswellen (23) jeweils parallel zu jeder Fahrschiene (13) und Führungsschiene (21) angeordnete endlose Zahnriemen (24) oder Ketten antreibt, die ihrerseits mit dem Fahrgestell (14) oder dem Schlitten (20) verbunden sind.

10. Vorrichtung nach einem der Ansprüche 4 bis 9, **dadurch gekennzeichnet**, daß der Antriebsmotor (22) des Portals (12) und ein Antriebsmotor (31)der Verschiebeeinrichtung (30) für die eine Klemmleiste (27) über eine elektrische Welle miteinander so gekuppelt (synchronisiert) sind, daß die Bewegungen des Portals (12) und der Verschiebeeinrichtung (30) entgegengesetzt zueinander sind.

## Claims

1. A method for row-wise separation of rectilinear, plastic porous concrete bodies, which are formed by longitudinal and transverse cutting of a rectilinear, plastic porous concrete block, wherein the cut block is so supported for the separation on a plurality of mutually parallel laminae that each row of porous concrete bodies is supported on at least on lamina, and the porous concrete bodies are then separated row-wise by sequential separation of the laminae, characterized in that the porous concrete block is so supported on the laminae on its largest side face (base surface) that its longest side edge runs parallel to the direction of the laminae, in that a clamping force is exerted before the separation from above on the upper ends of all the porous concrete bodies of the row to be separated and independently thereof from above on the upper ends of all the porous concrete bodies of the stationary row in contact with the row to be separated, and in that the clamping force is maintained during the separation and during the displacement of the lamina in the separating direction, a like directed displacing force is exerted synchronously on the upper ends of the porous concrete bodies carried by the separating lamina.

2. A method according to claim 1, characterized in that the porous concrete block is cut standing on edge on its long narrow side and is turned through 90° before being laid on the laminae, so that it lies on its major side surface before it is put on the laminae.

3. Apparatus for row-wise separation of rectilinear, plastic porous concrete bodies, which are formed by longitudinal and transverse cutting of a rectilinear, plastic porous concrete block, with a substantially rectangular base frame, a plurality of horizontal laminae arranged parallel alongside each other and which are movable horizontally in the base frame transverse to their longitudinal direction, a plurality of support pedestals extending upwardly from the laminae and arranged in a row, spaced from one another, on the upper side of each lamina, and a drive device engaging at least at the ends of each lamina, by means of which the laminae can be moved and their mutual spacing be altered, characterized in that the laminae (4, 4') are arranged in the longitudinal direction of the base frame (1) parallel to the longest side of the porous concrete block (6), in that a longitudinal support (10) is provided a distance (H) above the base frame (1), extending horizontally and parallel to the laminae (4, 4') and can be moved in the direction (V) of movement of the laminae (4, 4'), in that two horizontal clamp bars (26, 27) are arranged for vertical movement on the longitudinal support (10), being parallel to one another and to the longitudinal support, which bars can be pressed from above on to the upper ends of the porous concrete bodies (K, L') of the two adjacent rows respectively which are to be separated from one another, in that one (27) of the two clamp bars is movable on the longitudinal support (10) in its direction (V) of movement by means of a drive device (30-33) and in that the drive device (14-24) for the laminae (4, 4') and the drive device (30-33) for the clamp bar (27) are so synchronised with one another that, in the separation of a lamina (4) relative to the adjacent, stationary lamina (4'), the clamp bar (26) located vertically above the separating lamina (4) is moved in synchronism therewith and the clamp bar (27) located vertically above the stationary lamina (4') remains fixed in position.

4. Apparatus according to claim 3, characterized in that the longitudinal support (10) is part of a gantry (12) which can be moved in the direction (V) of displacement of the laminae (4, 4').

5. Apparatus according to claim 4, characterized in that the gantry (12) can be moved on running rails (13) which are arranged at the two cross sides of the base frame (1).

6. Apparatus according to claim 4, characterized in that a coupling device (15) is arranged on the carriage (14) of each standard (11) of the gantry (12), with which device the lamina (4, 4') currently to be separated can be coupled to the carriage (14).

7. Apparatus according to claim 6, characterized in that the coupling device (15) comprises a coupling bolt (17) which can be inserted into a recess (19) in the lamina (4, 4') to effect the coupling.

8. Apparatus according to claim 5, characterized in that guide rails (21) are provided in between and parallel to the running rails (13) of the gantry (12), on each of which is mounted a slide (20) which can be driven in synchronism with the carriage (14) of the gantry (12), and in that a coupling device (15) is arranged on each slide (20) wherewith the lamina (4, 4') currently to be separated can be coupled to the slide (20).

9. Apparatus according to claims 6 and 8, according to a common drive motor (22) is provided for synchronous drive of the carriage (14) and slides (20), the motor driving endless toothed belts (24) or chains parallel to respective running rails (13) and guide rails (21) via drive shafts (23) arranged parallel to the laminae (4, 4'), the belts or chains for their part each being coupled to the carriage (14) or the slide (20).

10. Apparatus according to any of claims 4 to 9, characterized in that the drive motor (22) of the gantry (12) and a drive motor (31) of the drive device (30) for the one clamp bar (27) are so coupled together (synchronised) through an electric shaft that the movements of the gantry (12) and the drive device (30) are opposite to one another.

## Revendications

1. Procédé pour espacer, rangée par rangée, des corps parallélépipédiques de béton cellulaire plastique, qui sont formés par le découpage longitudinal et transversal d'un bloc parallélépipédique de béton cellulaire plastique, selon lequel le bloc découpé est disposé, en vue de l'espacement, sur plusieurs lamelles parallèles, de manière que chaque rangée de corps de béton cellulaire soit supportée par au moins une lamelle, et selon lequel les corps de béton cellulaire sont ensuite espacés, rangée par rangée, par espacement successif des lamelles, caractérisé en ce que le bloc de béton cellulaire est couché par sa plus grande face (surface de base) sur les lamelles, de manière que son côté latéral le plus long soit parallèle à la direction longitudinale des lamelles, que, avant l'espacement, une force de serrage est exercée d'en haut sur les extrémités supérieures de tous les corps de béton cellulaire de la rangée à espacer et, indépendamment de cela, sur les extrémités supérieures de tous les corps de béton cellulaire de la rangée au repos adjacente à la rangée à espacer, et que, lors de l'espacement, cette force de serrage est maintenue et, en synchronisme avec le déplacement en translation dans la direction d'espacement de la lamelle produisant l'espacement, une force de translation de même direction est exercée sur les extrémités supérieures des corps de béton cellulaire portés par la lamelle produisant l'espacement.

2. Procédé selon la revendication 1, caractérisé en ce que le bloc de béton cellulaire est découpé en étant posé sur chant sur son long côté étroit et est basculé de 90° avant d'être couché sur les lamelles, de manière qu'il soit disposé sur sa plus grande face avant qu'il ne soit couché sur les lamelles.

3. Dispositif pour espacer, rangée par rangée, des corps parallélépipédiques de béton cellulaire plastique, qui sont formés par le découpage longitudinal et transversal d'un bloc parallélépipédique de béton cellulaire plastique, dispositif qui comprend un bâti de base essentiellement rectangulaire, plusieurs lamelles horizontales disposées parallèlement les unes à côté des autres et déplaçables horizontalement en translation dans le bâti de base, transversalement par rapport à leur direction longitudinale, plusieurs supports s'étendant vers le haut à partir des lamelles et disposés sur la face supérieure de chaque lamelle, en formant chaque fois une rangée dans laquelle ils sont placés à distance les uns des autres, ainsi qu'un dispositif de translation attaquant au moins les extrémités de chaque lamelle et au moyen duquel les lamelles sont déplaçables en translation et leur écartement mutuel est variable, caractérisé en ce que les lamelles (4, 4') sont disposées dans la direction longitudinale du bâti de base (1), parallèlement au plus long côté du bloc de béton cellulaire (B), qu'une poutre longitudinale (10), s'étendant horizontalement et parallèlement aux lamelles (4, 4'), est prévue à distance (H) au-dessus du bâti de base (1), poutre qui est déplaçable dans la direction de translation (V) des lamelles (4, 4'), que deux barres de serrage (26, 27) horizontales, parallèles entre elles et à la poutre longitudinale, sont disposées verticalement mobiles sur cette poutre (10), barres dont chacune peut être pressée d'en haut contre les extrémités supérieures des corps de béton cellulaire (K, K') d'une des deux rangées voisines chaque fois à espacer l'une de l'autre, que l'une (27) des deux barres de serrage est déplaçable en translation sur la poutre longitudinale (10) et dans la direction de mouvement (V) de celle-ci au moyen d'un dispositif de translation (30-33), et que le dispositif de translation (14-24) des lamelles (4, 4') et le dispositif de translation (30-33) de ladite barre de serrage (27) sont synchronisés entre eux de manière que, lors de l'espacement d'une lamelle (4) par rapport à la lamelle (4') au repos adjacente, la barre de serrage (26) se trouvant verticalement au-dessus de la lamelle (4) produisant l'espacement, soit déplacée en synchronisme avec cette lamelle et que la barre de serrage (27) se trouvant verticalement au-dessus de la lamelle (4') au repos, reste stationnaire.

4. Dispositif selon la revendication 3, caractérisé en ce que la poutre longitudinale (10) fait partie d'un portique (12) déplaçable dans la direction de translation (V) des lamelles (4, 4').

5. Dispositif selon la revendication 4, caractérisé en ce que le portique (12) est déplaçable sur des rails de roulement (13) disposés sur les deux côtés transversaux du bâti de base (1).

6. Dispositif selon la revendication 4, caractérisé en ce qu'un dispositif d'accouplement (15) est placé sur le châssis (14) de roulement de chaque montant (11) du portique (12), dispositif par lequel la lamelle (4, 4') produisant l'espacement est accouplable au châssis (14).

7. Dispositif selon la revendication 6, caractérisé en ce que le dispositif d'accouplement (15) comprend une tige d'accouplement (17) pouvant être engagée dans un creux (19) de la lamelle (4, 4') en vue de l'accouplement.

8. Dispositif selon la revendication 5, caractérisé en ce que des rails de guidage (21) sont prévus entre les rails de roulement (13) du portique (12), parallèlement à ceux-ci, rails de guidage sur chacun desquels est monté un coulisseau (20) déplaçable en synchronisme avec les châssis (14) de roulement du portique (12), et qu'un dispositif d'accouplement (15) est placé sur chaque coulisseau (20) pour permettre l'accouplement à ce coulisseau de la lamelle (4, 4') produisant l'espacement.

9. Dispositif selon les revendications 6 et 8, caractérisé en ce qu'un moteur commun de commande (22) est prévu pour le déplacement synchrone des châssis (14) et des coulisseaux (20), moteur qui fait circuler, par l'intermédiaire d'arbres de transmission (23) disposés parallèlement aux lamelles (4, 4'), des courroies crantées (24) ou des chaînes sans fin, orientées chacune parallèlement à chaque rail de roulement (13) et à chaque rail de guidage (21), courroies ou chaînes qui sont elles-mêmes reliées chacune au châssis (14) ou au coulisseau (20).

10. Dispositif selon une des revendications 4 à 9, caractérisé en ce que le moteur de commande (22) du portique (12) et un moteur de commande (31) du dispositif de translation (30) pour ladite barre de serrage (27) sont couplés (synchronisés) entre eux par un arbre électrique, de manière que les mouvements du portique (12) et ceux du dispositif de translation (30) soient de sens contraires.
